# EUROPEAN PATENT APPLICATION

(11) **EP 4 663 341 A1**
(43) Date of publication of application: **17.12.2025**
(21) Application number: 24181203.1
(22) Date of filing: 10.06.2024
(51) Int. Cl.: B23Q 1/25, B23Q 7/05

(54) **DEVICE AND METHOD FOR MACHINING A WORK PIECE, IN PARTICULAR ELONGATE PROFILES, SUCH AS PIPES AND BEAMS**

(71) Applicant: HGG International B.V., 1771 SW Wieringerwerf (NL)
(72) Inventor: Helsloot, Thijs., 1732 LT Lutjewinkel (NL); Slagter, Klaas., 1655 KL Sijbekarspel (NL)
(74) Representative: 't Jong, Bastiaan Jacob

(57) **Abstract**

The invention relates to a device for machining a work piece, in particular elongate profiles, such as pipes and beams, which device comprises:
- an annular frame with a circular track extending around a center axis, which circular track is arranged along the annular frame;
- a serial manipulator having a base and a tool head connected by a series of links and joints, the base being movable along the circular track; and
- primary adjusting means arranged to the annular frame on both sides of the primary longitudinal plane of the circular track to align a primary longitudinal plane of a work piece with the primary longitudinal plane of the circular track.

## Description

The invention relates to a device for machining a work piece, in particular elongate profiles, such as pipes and beams, which device comprises:
- an annular frame with a circular track extending around a center axis, which circular track is arranged along the annular frame;
- a serial manipulator having a base and a tool head connected by a series of links and joints, the base being movable along the circular track.

Such a device is known from EP 02733619.

According to this publication, and is common for devices machining elongate profiles, the work piece is positioned on a support bed and moved in transverse direction against a fixed stop. The fixed stop provides for a known reference, based on which the tool head of the serial manipulator can be positioned around the work piece to machine the work piece.

When a serial manipulator is moved to a position at the edges of its work space, there is a substantial chance on a robot singularity. A robot singularity is a configuration in which the tool head becomes blocked in certain directions. A robot singularity could thus prevent the tool head to be positioned correctly. Furthermore, moving the tool head near the boundaries of the work space, also reduces speed and accuracy of the serial manipulator.

It is an object of the invention to reduce the above mentioned disadvantages.

This object is achieved with a device according to the invention, which is characterized by primary adjusting means arranged to the annular frame on both sides of the primary longitudinal plane of the circular track to align a primary longitudinal plane of a work piece with the primary longitudinal plane of the circular track.

A longitudinal plane of the circular track is a plane in which the center axis is contained. In the same definition, the longitudinal plane of a work piece is a plane in which the longitudinal axis of the work piece is contained.

By aligning the primary longitudinal plane of the work piece with the primary longitudinal plane of the circular track, it is ensured that the work piece is centered in the work space of the serial manipulator in the direction perpendicular to the primary longitudinal plane of the circular track. By having the work piece centered in the work space, the tool head of the serial manipulator does not need to be positioned near the edges of the work space and singularities will be prevented. Also the accuracy of the positioning of the tool head will be improved as the serial manipulator does not have to reach over a long length.

The primary longitudinal plane of the circular track will typically be chosen as the vertical plane, such that aligning of the work piece will not be counteracted by the gravitational force.

In a preferred embodiment of the device according to the invention the primary adjusting means comprise at least two rollers arranged opposite of each other, wherein the position of each roller is adjustable in a direction perpendicular to the primary longitudinal plane.

By positioning the rollers, the position of the work piece can be positioned relative to the primary longitudinal plane of the circular track.

Preferably, the rotation axis of the at least two rollers is parallel to the primary longitudinal plane and perpendicular to the center axis. This allows for the work piece to be advanced in longitudinal direction, while the rollers are kept in contact with the work piece.

A further embodiment of the device according to the invention further comprises distance sensors arranged to the annular frame to measure the position of a work piece relative to the primary longitudinal plane.

In order to further improve the accuracy of the serial manipulator, the distance sensors assist in determining the exact position of the work piece relative to the primary longitudinal plane of the circular track. This allows for a rough alignment by the primary adjusting means and even heavy clamping will not be necessary. With the prior art devices for machining elongate profiles having a fixed stop, it is a necessity to position the work piece firmly against the fixed stop and clamp the work piece, in order to be able to obtain sufficient accuracy for tool head of the serial manipulator. With the distance sensors of the embodiment of the device according to the invention, the work piece can be positioned more liberal.

Still a further embodiment of the device according to the invention, further comprises a support bed for supporting a work piece, the support bed extending in a direction parallel to the center axis and is arranged to the annular frame.

Preferably, the device further comprises a longitudinal drive for advancing a work piece through the annular frame.

This allows for long work pieces to be handled easily and to allow the device according to the invention to perform machining operations on small parts of the elongate work piece.

A further preferred embodiment of the device according to the invention further comprises secondary adjusting means arranged to the annular frame on both sides of the secondary longitudinal plane, being perpendicular to the primary longitudinal plane, of the circular track to align a secondary longitudinal plane of a work piece with the secondary longitudinal plane of the circular track.

With this embodiment the work piece can be optimally centered in the work space of the serial manipulator. This however requires typically a vertical movement of the work piece along with the support bed and surrounding equipment in a manufacturing line or the vertical movement of the device relative to the support bed.

The invention also relates to a method for machining a work piece, in particular elongate profiles, such as pipes and beams, which method comprises the steps of:
- providing a device according to the invention;
- providing an elongate work piece having a primary longitudinal plane and a secondary longitudinal plane, being perpendicular to the primary longitudinal plane;
- advancing the elongate work piece through the annular frame of the device;
- adjusting the primary adjusting means of the device in contact with the work piece on opposite sides and aligning the primary longitudinal plane of a work piece with the primary longitudinal plane of the circular track.

In a preferred embodiment of the method according to the invention the offset between the primary longitudinal plane of the work piece and the longitudinal plane of the circular track is less than 10 millimeters.

With the method and device according to the invention, it is allowed to have a relative small offset between the primary longitudinal plane of the work piece and the longitudinal plane of the circular track to still have the advantage of the invention and to reduce the chance on singularities and improve the accuracy of the serial manipulator.

These and other features of the invention will be elucidated in conjunction with the accompanying drawings.
Figure 1 shows a perspective view of an embodiment of a device according to the invention.
Figures 2A and 2B show schematically a longitudinal view of the device of figure 1.
Figures 3A and 3B show schematically a longitudinal view of a second embodiment of the device according to the invention.

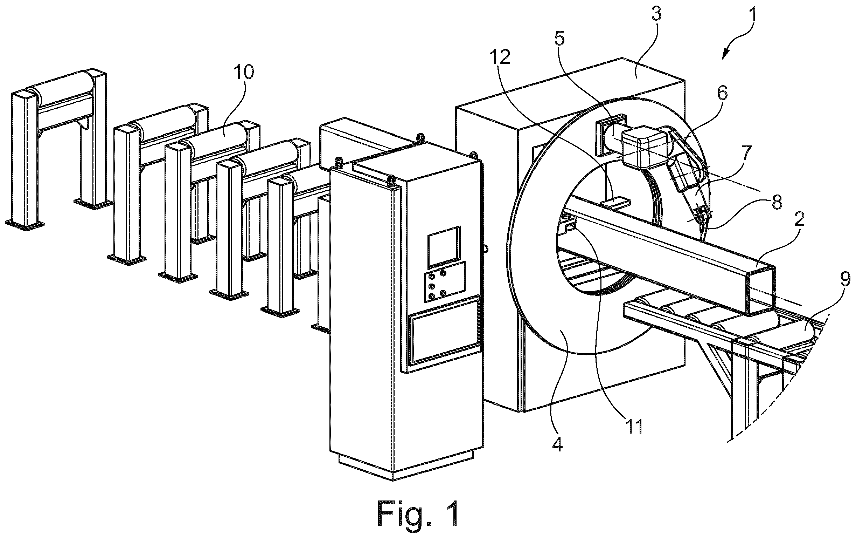

Figure 1 shows a device 1 for machining a work piece, in particular an elongate profile 2. The device 1 has an annular frame 3 with a circular track 4 on which the base 5 of a serial manipulator is arranged. The serial manipulator has furthermore two links 6, 7 and a tool head 8 connected to each other by joints.

Support beds 9, 10 are provided on both sides of the annular frame 3 to support the elongate profile 2 and allow for horizontal adjustment by the adjusting means 11, 12.

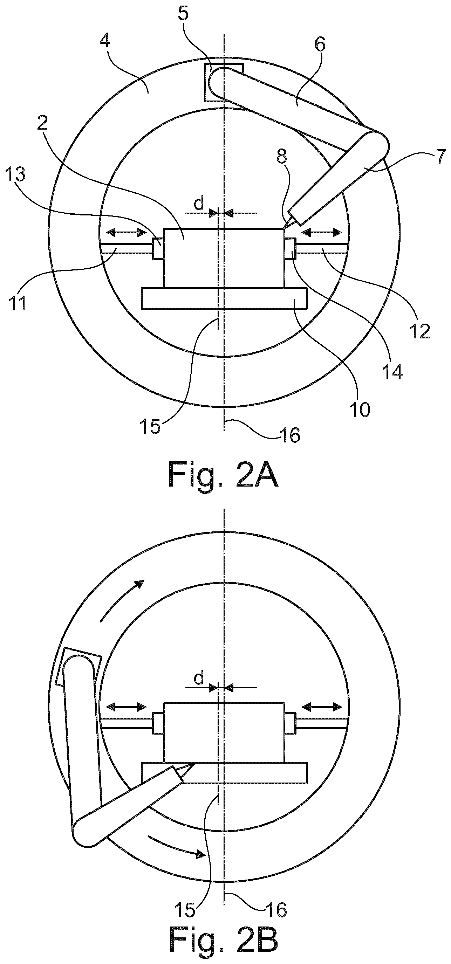

Figures 2A and 2B show schematically a longitudinal view of the device 1 of figure 1. The adjusting means 11, 12 are provided with rollers 13, 14 which are in contact with the side walls of the elongate profile 2. Each adjusting means 11, 12 can be moved in horizontal position to shift the elongate profile 2 in horizontal direction over the support bed 10.

The adjusting means 11, 12 are controlled such that the primary longitudinal plane 15 of the elongate profile 2 is aligned with the primary longitudinal plane 16 of the circular track 4. Although having the primary longitudinal plane 15 coincide with the primary longitudinal plane 16 of the circular track 4 is optimal, also a small offset d of less than 10 millimeters still provides the advantages of the invention.

Having the primary longitudinal plane 15 aligned with the primary longitudinal plane 16 of the circular track 4 allows for the serial manipulator 5, 6, 7, 8 to move along the circular track 4 (see figure 2B) to machine all sides of the elongate profile 2, without the need for the tool head 8 to move close to the boundaries, which could result in singularities for the serial manipulator 5, 6, 7, 8.

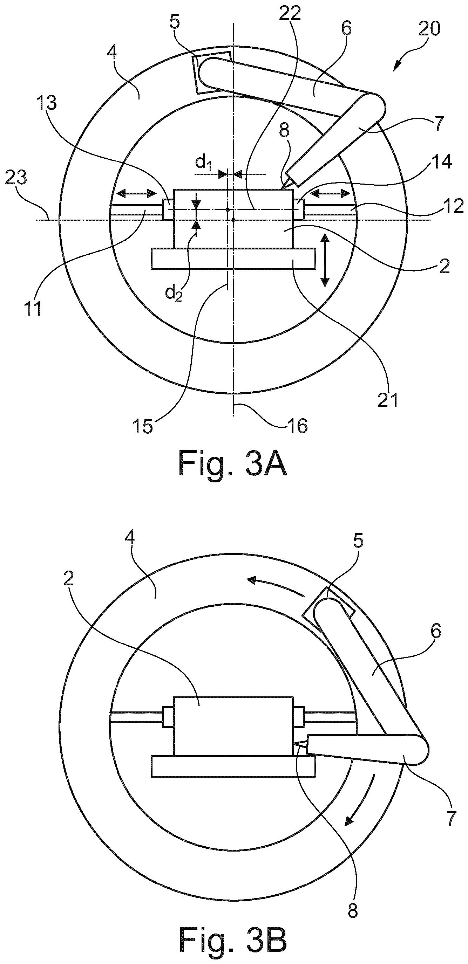

Figures 3A and 3B show a second embodiment 20 of the device according to the invention. The second embodiment 20 resembles the device 1 of figure 1 and similar parts are designated with the same reference numerals.

With the device 20 the elongate profile 2 is adjusted in horizontal direction with the adjustment means 11, 12, 13, 14 to align the primary longitudinal plane 15 of the elongate profile 2 with the primary longitudinal plane 16 of the circular track 4. Furthermore the elongate profile 2 is adjusted in vertical direction with a height adjustable support bed 21 to align the secondary longitudinal plane 22 of the elongate profile 2 with the secondary longitudinal plane 23 of the circular track 4.

As a result of both alignments, the elongate profile 2 is centered within the circular track 4 with only a small offset d₁ in horizontal direction and a small offset d₂ in vertical direction.

As shown in figure 3B, the serial manipulator 5, 6, 7, 8 is then moved along the circular track 4 to machine the elongate profile 2 on all sides. Because the elongate profile 2 is centered in the circular track 4, the chance on singularities is decreased and the accuracy of the serial manipulator 5, 6, 7, 8 is increased.

## Claims

1. Device for machining a work piece, in particular elongate profiles, such as pipes and beams, which device comprises:
- an annular frame with a circular track extending around a center axis, which circular track is arranged along the annular frame;
- a serial manipulator having a base and a tool head connected by a series of links and joints, the base being movable along the circular track;
**characterized by**
- primary adjusting means arranged to the annular frame on both sides of the primary longitudinal plane of the circular track to align a primary longitudinal plane of a work piece with the primary longitudinal plane of the circular track.

2. Device according to claim 1, wherein the primary adjusting means comprise at least two rollers arranged opposite of each other, wherein the position of each roller is adjustable in a direction perpendicular to the primary longitudinal plane.

3. Device according to claim 2, wherein the rotation axis of the at least two rollers is parallel to the primary longitudinal plane and perpendicular to the center axis..

4. Device according to any of the preceding claims, further comprising distance sensors arranged to the annular frame to measure the position of a work piece relative to the primary longitudinal plane.

5. Device according to any of the preceding claims, further comprising a support bed for supporting a work piece, the support bed extending in a direction parallel to the center axis and is arranged to the annular frame.

6. Device according to any of the preceding claims further comprising a longitudinal drive for advancing a work piece through the annular frame.

7. Device according to any of the preceding claims, further comprising secondary adjusting means arranged to the annular frame on both sides of the secondary longitudinal plane, being perpendicular to the primary longitudinal plane, of the circular track to align a secondary longitudinal plane of a work piece with the secondary longitudinal plane of the circular track.

8. Method for machining a work piece, in particular elongate profiles, such as pipes and beams, which method comprises the steps of:
- providing a device according to any of the preceding claims;
- providing an elongate work piece having a primary longitudinal plane and a secondary longitudinal plane, being perpendicular to the primary longitudinal plane;
- advancing the elongate work piece through the annular frame of the device;
- adjusting the primary adjusting means of the device in contact with the work piece on opposite sides and aligning the primary longitudinal plane of a work piece with the primary longitudinal plane of the circular track.

9. Method according to claim 8, wherein the offset between the primary longitudinal plane of the work piece and the longitudinal plane of the circular track is less than 10 millimeters.
